# EUROPÄISCHE PATENTSCHRIFT

(11) **EP 0 855 436 B1**
(45) Veröffentlichungstag und Bekanntmachung des Hinweises auf die Patenterteilung: **22.09.2004**
(21) Anmeldenummer: 98100117.5
(22) Anmeldetag: 07.01.1998
(51) Int. Cl.: C10L 1/02

(54) **Verwendung von Acetalen und Triglyceriden als umweltfreundlichen Dieseltreibstoff**
Use of acetals and triglycerides as Ecodiesel
Utilisation d'acetals et de triglycerides en tant qu'Ecodiesel

(30) Priorität: 28.01.1997 DE 19702989
(43) Veröffentlichungstag der Anmeldung: 29.07.1998
(73) Patentinhaber: Celanese Chemicals Europe GmbH, 60439 Frankfurt am Main (DE)
(72) Erfinder: Hille, Martin, Dr., 65835 Liederbach (DE); Weinelt, Frank, Dr., 84508 Burgkirchen (DE); Wittkus, Heinz,, 60529 Frankfurt (DE); Reimann, Werner, Dr., 65929 Frankfurt (DE)

(56) Entgegenhaltungen:
- US-A- 4 397 655

## Beschreibung

Schon Rudolf Diesel benutzte Pflanzenöle zum Betrieb der ersten Dieselmotoren. Er nahm an, wie viele Leute nach ihm, Erdöl werde bald versiegen. Das große Angebot von Erdöl und dessen Fraktionen im letzten Jahrhundert führte im Fahrzeugbau zu Motoren, welche auf die Verwendung von Mitteldestillaten des Erdöls optimiert sind. Zur geringeren Belastung der Umwelt wurden sowohl motortechnisch als auch bei der Treibstoffzusammensetzung erhebliche Verbesserungen erzielt.

Ganz andere Überlegungen, die Reduzierung der CO₂-Abgase in die Atmosphäre und die industrielle Nutzung von nachwachsenden Rohstoffen, machten die Verwendung von Pflanzenölen wieder aktuell. Diese sind in reiner Form als Treibstoff in modernen Fahrzeugdieselmotoren mit der hohen Viskosität nicht einsetzbar. In Dieselmotoren verwendbar erwiesen sich die Ester des Rapsöls. Dazu wird das Rapsöl gespalten und die entstehenden zumeist ungesättigten Karbonsäuren mit Methanol verestert und das freiwerdende Glyzerin abgetrennt. Diese chemische Aufarbeitung verteuert nicht unwesentlich den Rapsölmethylester als Dieseltreibstoff (DE-A-42 09 779, US 5354 878). Der Einsatz im Winter ist begrenzt, weil der Stockpunkt dieser Ester zwischen -10 und -20°C liegt.

Aus US-A-4,397,655 sind synthetische Dieseltreibstoffe bekannt, die auf Pflanzenölen beruhen. Neben Pflanzenölen enthalten die synthetischen Dieselkraftstoffe einen wasserlöslichen Alkohol und ein Ketal, Acetal oder einen Orthoester als Additiv. Vorzugsweise enthalten die Acetale der Formel RCH(OR')₂ Alkylreste mit 1 bis 4 Kohlenstoffatomen.

Durch den Einsatz von Rapsölmethylester wird die Atmosphäre nicht weiter an CO₂ angereichert, weil dieses Gas beim Wachstum der Atmosphäre entzogen wurde. Ein großer Vorteil ist die biologische Abbaubarkeit und praktisch kein Schwefelgehalt. Deshalb eignet sich Rapsölmethylester als Treibstoff besonders in der Forst- und Landwirtschaft, in Naturschutz- und Wassereinzugsgebieten, Naturparks sowie Seen und Flüssen. Der Anbau von Raps kann auf Stillegungsflächen betrieben werden, was die Subventionen für die Landwirtschaft mindert, jedoch kann der Rapsölmethylester als Dieseltreibstoff nur wirtschaftlich eingesetzt werden, wenn der Staat auf eine Besteuerung hochgradig oder ganz verzichtet. Die Erstellung von speziellen Anlagen zur Herstellung von Rapsölmethylester wird beschränkt bleiben, weil das jährliche Aufkommen von Raps stark schwankt. Einmal sind diese Schwankungen wetterbedingt oder es wird weniger oder mehr angebaut, weil andere Feldfrüchte abhängig vom Weltmarktpreis bevorzugt produziert werden. Diese unregelmäßigen Aufkommen der pflanzlichen Öle treten mehr oder weniger bei allen durch Agrikultur gewonnenen Ölen auf. Außerdem kommen für Treibstoffe nur die Überschüsse zum Einsatz, welche nicht für Lebensmittel und andere industrielle Zwecke verbraucht werden.

Es bestand somit die Aufgabe, die vorstehend beschriebenen Nachteile des Rapsölmethylesters beim Einsatz als Dieselkraftstoff zu vermeiden und einen Weg für die Verwendung von Pflanzenölen in einer besser geeigneten Form zu finden.

Überraschenderweise wurde nun gefunden, daß die direkte Verwendung von flüssigen Pflanzen- oder Tierölen ohne vorherige Veresterung unter gleichzeitiger Mitverwendung von Acetalen als Dieseltreibstoff möglich ist.

Gegenstand der Erfindung ist somit die Verwendung von Acetalen mit einem Flammpunkt von über 55°C gemäß Dieselspezifikation, der allgemeinen Formel (I) oder (II) 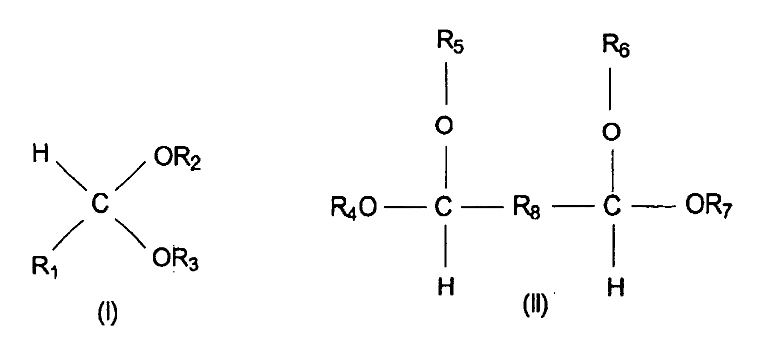 worin
- R₁: einen Alkylrest mit 2 bis 4 C-Aomen,
- R₂ und R₃: Alkylreste mit 4 bis 8 C-Atomen,
- R₄ bis R₇: Alkylreste mit 1 bis 5 C-Atomen bedeuten und
- R₈: O oder (CH₂)ₙ bedeutet, wobei n eine Zahl von 0 bis 5 ist,
in Kombination mit natürlichen flüssigen Triglyceriden pflanzlichen oder tierischen Ursprungs als Dieseltreibstoff.

Dabei werden Gemische aus Acetalen und Rapsöl oder anderen natürlichen Triglyceriden pflanzlichen oder tierischen Ursprungs wie beispielsweise Palmöl, Palmkernöl, Sojaöl, Erdnußöl, Sonnenblumenöl, Canolanöl, Kokosnußöl, Tallöl oder Leinöl verwendet. Besonders geeignet sind Rapsöl und Sojaöl.

Es können dabei 5 bis 95 Gew.-% Triglyceride und 5 bis 95 Gew.-% Acetale zum Einsatz kommen.

Es kommen Acetale zur Anwendung, welche einen Flammpunkt gemäß der Dieselspezifikation von über 55°C und vorteilhafterweise eine niedrige Viskosität besitzen. Dadurch läßt sich die für den Treibstoff benötigte Viskosität einstellen.

Acetale erhöhen, was bekannt ist, die Cetanzahl. Mischungen von Acetalen und Triglyceriden haben teilweise Cetanzahlen, die erheblich über den zur Zeit praktizierten liegen, was zur besseren Verbrennung des Treibstoffs mit geringerer Emission führt. Die für die Erfindung geeigneten Acetale sind biologisch abbaubar und mit den Gemischen Acetale/Triglyceride werden tiefere Stockpunkte und auch CFPP-Werte (cold filter plugging point) als mit Rapsölmethylester erreicht. Acetale sind Produkte auf petrochemischer Basis, welche in existierenden oder leicht zu modifizierenden chemischen Anlagen in großen Volumina hergestellt werden können. Eine Koppelung der Verwendung von Triglyceriden als Treibstoffe mit der petrochemischen Großindustrie würde Schwankungen im Angebot z.B. von Rapsölen und anderen Triglyceriden besser ausgleichen als spezielle Anlagen zur Herstellung von deren Estern, weil diese Großanlagen auch zur Produktion anderer Chemikalien eingesetzt werden können. Diese Mischungen enthalten praktisch keinen Schwefel, Stickstoff oder Aromaten.

Die Acetale der erfindungsgemäßen Dieseltreibstoffe sind Umsetzungsprodukte aus Aldehyden oder Dialdehyden mit Alkoholen und lassen sich mit folgenden Formeln beschreiben:

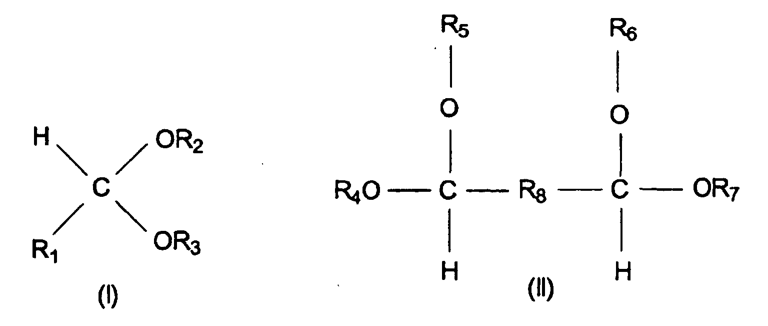

R₁ bedeutet einen Alkylrest mit 2 bis 4 C-Atomen, R₂ und R₃ bedeuten Alkylreste mit 4 bis 8 C-Atomen, R₄ bis R₇ bedeuten Alkylreste mit 1 bis 5 C-Atomen und R₈ kann O oder (CH₂)ₙ sein, wobei n eine Zahl von 0 bis 5 ist. Sehr gut geeignet sind Acetale, wobei n die Zahl 0 beutet.

Diese Dieseltreibstoffe enthalten für die erforderliche Cetanzahl keine stickstoffhaltigen Zündverbesserer, welche die Emission von nitrosen Gasen erhöhen. Der Sauerstoffgehalt läßt sich je nach Anforderung in einem breiten Konzentrationsbereich einstellen.

**Tabelle 1**

| (Vergleichsbeispiele) | | | | |
|---|---|---|---|---|
| Probenbezeichnung Zusammensetzung (in Gew.%) | Stockpunkt (am rotierenden Thermometer) °C DIN/ISO 3016 | Dichte 20°C (Aerometer) g/cm³ DIN 51757 | Viskosität 20°C nach Ubbelohde mPas DIN 51562 | Cetanzahl |
| Dibutylformal (DBF) | -50,00 | 0,83 | 1,20 | 61,50 |
| 75% DBF | -32,00 | 0,85 | 2,60 | 59,50 |
| 25% Rapsöl | | | | |
| 50% DBF | -26,00 | 0,88 | 5,90 | 57,00 |
| 50% Rapsöl | | | | |
| 25% DBF | -15,00 | 0,89 | 17,20 | 51,40 |
| 75% Rapsöl | | | | |
| 10% DBF | -10,00 | 0,91 | 37,50 | 46,90 |
| 90% Rapsöl | | | | |
| 75% DBF | -15,00 | 0,85 | 2,20 | 59,05 |
| 25% Sojaöl | | | | |
| 50% DBF | -12,00 | 0,88 | 5,50 | 57,00 |
| 50% Sojaöl | | | | |
| 25% DBF | -7,00 | 0,89 | 15,90 | 56,80 |
| 75% Sojaöl | | | | |
| 10%DBF | -2,00 | 0,91 | 32,50 | 47,50 |
| 90%Sojaöl | | | | |
| 35%DBF | -23,00 | 0,85 | 4,60 | 53,80 |
| 35%Rapsöl | | | | |
| 30%Diesel | | | | |
| 25%DBF | -17,00 | 0,84 | 4,10 | 51,50 |
| 25%Rapsöl | | | | |
| 50%Diesel | | | | |
| 15% DBF | -14,00 | 0,84 | 3,60 | 49,30 |
| 15%Rapsöl | | | | |
| 70%Diesel | | | | |
| 17,5%DBF | -11,00 | 0,88 | 9,80 | 50,50 |
| 52,5%Rapsöl | | | | |
| 30%Diesel | | | | |
| 12,5%DBF | -15,00 | 0,86 | 7,00 | 49,40 |
| 37,5%Rapsöl | | | | |
| 50%Diesel | | | | |
| 7,5%DBF, | -18,00 | 0,84 | 4,90 | 48,20 |
| 22,5%Rapsöl | | | | |
| 70% Diesel | | | | |
| Diesel | -15,00 | 0,82 | 3,30 | 45,00 |
| Sojaöl | -1,00 | 0,92 | 54,O | < 45 |
| Rapsöl | -15,00 | 0,92 | 70,60 | < 45 |

**Tabelle 2:**

| Einfluß von Acetalen auf die Cetanzahl von Diesel | | | |
|---|---|---|---|
| Konzentration der Additive (mg/kg) | Nr. 1 | Nr. 2 | Nr. 3 |
| reines Dieselöl | 49,1 | 49,1 | 49,1 |
| 200 | 49,1 | 49,1 | 49,2 |
| 1000 | 49,2 | 49,3 | 49,5 |
| 20000 | 50, 3 | 50, 8 | 51,4 |
| 60000 | 51,0 | 52,8 | 53,5 |
| Nr. 1: Isobutyraldehyd-di-2-ethylhexylacetal | | | |
| Nr. 2: Butyraldehyd-di-butylacetal | | | |
| Nr. 3: Glyoxaltetraethylacetal | | | |

**Tabelle 3:**

| Biologischer Abbau von Acetalen gemäß OECD-Richtlinien 301 B | |
|---|---|
| Acetal | Abbau in % nach 28 Tagen |
| Isobutyraldehd-2-diethylhexylacetal | |
| 10 mg/l | 71 |
| 20 mg/l | 63 |

| Acetaldehyd-Dioctylacetal (Vergleichsbeispiel) | |
|---|---|
| 10 mg/l | 75 |
| 20 mg/l | 66 |

| Butyraldehyd-Dibutylacetal | |
|---|---|
| 10 mg/l | 95 |

Die Angabe mg/l bezieht sich auf die reine Acetallösung.

Die Tabelle 1 zeigt, daß Mischungen von Formaldehyd-di-butylacetal (auch Dibutylformal genannt) und Raps- sowiesojaöl Dieseltreibstoffe mit teilweise beachtlichen hohen Cetanzahlen ergeben. Den Mischungen können erhebliche Mengen Dieselöl zugesetzt werden. Damit werden auch die in der Praxis geforderten Cetanzahlen erreicht. Mischungen aus Triglycerid und Acetal von beispielsweise 1:1 ergeben die sehr gute Cetanzahl von 57, einen Stockpunkt von unter -25 °C und Viskositäten von ca. 6 mPas. Ein solcher winterfester, biologisch abbaubarer Dieseltreibstoff mit hoher Cetanzahl, praktisch ohne Schwefel, Stickstoff und Aromaten, welches die Emissionsschadstoffe minimiert, wäre ein optimaler Treibstoff für umweltsensitive Gebiete wie Naturparks, Wassereinzugsgebiete, Forsten, Flüsse, Seen und Innenstädte.

Die Tabelle 2 zeigt auch den Einfluß von Acetalen als Cetanzahlverbesserer in einer als Dieseltreibstoff geeigneten Kohlenwasserstofffraktion. Es ist ersichtlich, wie die Cetanzahlverbesserung proportional der Konzentration an Acetalen der Formel (I) und (II) ist.

Der Effekt ist in reinen Kohlenwasserstoffen gering, und deshalb haben Acetale als Cetanzahlverbesserer keinen verbreiteten Eingang in die bisherige Praxis gefunden. Für diesen Zweck gibt es viel wirksamere Produkte wie z.B. Peroxide und Nitrate, welche in Mengen von bis zu 500 ppm verwendet werden.

Die optimalen Produkte auf Basis Nitrate führen Stickstoff in den Dieseltreibstoff ein, welcher den Anteil an Stickoxiden in den Abgasen erhöht (DE-A-41 29 911; US 4,541,837; DE-A-31 36 030; US 5,433,756; DE-A-32 33 834).

Tabelle 3 zeigt die gute biologische Abbaubarkeit von Acetalen. Sie nimmt mit fallendem Molekulargewicht zu, was die niedermolekularen Acetale, wie sie bevorzugt für die erfindungsgemäßen Mischungen verwendet werden, begünstigt.

## Patentansprüche

1. Verwendung von Acetalen mit einem Flammpunkt von über 55°C gemäß Dieselspezifikation, der allgemeinen Formel (I) oder (II) 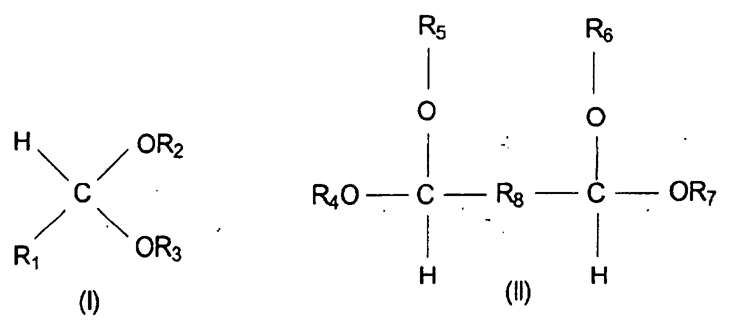 worin
R₁ einen Alkylrest mit 2 bis 4 C-Atomen
R₂ und R₃ Alkylreste mit 4 bis 8 C-Atomen,
R₄ bis R₇ Alkylreste mit 1 bis 5 C-Atomen bedeuten, und
R₈ O oder (CH₂)ₙ bedeutet, wobei n eine Zahl von 0 bis 5 ist,
in Kombination mit natürlichen Triglyceriden pflanzlichen oder tierischen Ursprungs als Dieseltreibstoff.

2. Verwendung von Acetalen gemäß Anspruch 1, wobei die natürlichen Triglyceride Rapsöl, Sojaöl, Erdnußöl, Palmöl, Palmkemöl, Kokosnußöl, Tallöl, Canolaöl oder Leinöl sind.

## Claims

1. The use of acetals having a flashpoint of more than 55°C according to the diesel specification, of the formula (I) or (II) 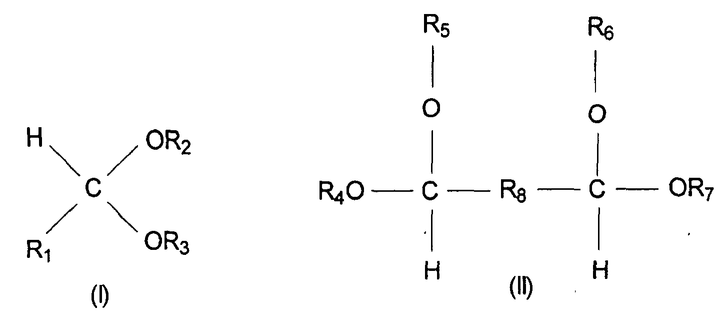 in which
R₁ is an alkyl radical having 2 to 4 carbon atoms
R₂ and R₃ are alkyl radicals having 4 to 8 carbon atoms,
R₄ to R₇ are alkyl radicals having 1 to 5 carbon atoms and
R₈ is O or (CH₂)ₙ where n is a number from 0 to 5
in combination with natural triglycerides of vegetable or animal origin as diesel fuel.

2. The use of acetals as claimed in claim 1, wherein the natural triglycerides are rapeseed oil, soybean oil, peanut oil, palm oil, palm kernel oil, coconut oil, tall oil, canola oil or linseed oil.

## Revendications

1. Utilisation d'acétals présentant un point éclair supérieur à 55°C selon la spécification diesel, de formule générale (I) ou (II) 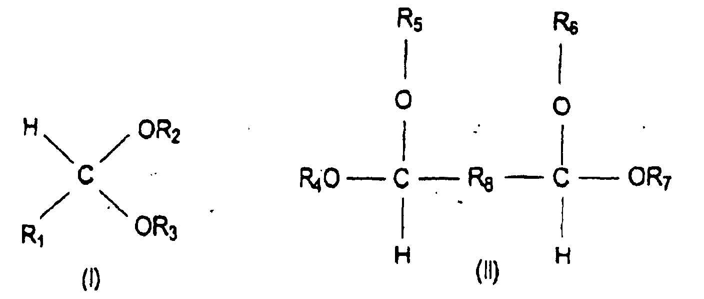 dans laquelle
R₁ signifie un radical alkyle comprenant 2 à 4 atomes de carbone,
R₂ et R₃ signifient des radicaux alkyle comprenant 4 à 8 atomes de carbone,
R₄ à R₇ signifient des radicaux alkyle comprenant 1 à 5 atomes de carbone et
R₈ signifie O ou (CH₂)ₙ, où n est un nombre de 0 à 5, en combinaison avec des triglycérides liquides d'origine végétale ou animale comme carburant diesel.

2. Utilisation d'acétals selon la revendication 1, les triglycérides naturels étant l'huile de colza, l'huile de soja, l'huile d'arachide, l'huile de palme, l'huile de noyau de palme, l'huile de noix de coco, l'huile de tallow, l'huile de canota ou l'huile de lin.
